# EUROPÄISCHE PATENTSCHRIFT

(11) **EP 0 710 176 B1**
(45) Veröffentlichungstag und Bekanntmachung des Hinweises auf die Patenterteilung: **21.07.1999**
(21) Anmeldenummer: 95917250.3
(22) Anmeldetag: 17.05.1995
(51) Int. Cl.: B31B 19/84

(54) **VORRICHTUNG UND VERFAHREN ZUR HERSTELLUNG VON BEUTELN**
BAG MANUFACTURING PROCESS AND DEVICE
PROCEDE ET DISPOSITIF DE PRODUCTION DE SACHETS

(30) Priorität: 17.05.1994 CH 154494
(43) Veröffentlichungstag der Anmeldung: 08.05.1996
(73) Patentinhaber: CELLPACK AG, CH-5610 Wohlen (CH)
(72) Erfinder: AESCHBACH, Rudolf, CH-5610 Wohlen (CH); WIESMANN, Martin, CH-5524 Niederwil (CH)
(74) Vertreter: Blum, Rudolf Emil Ernst
(86) Internationale Anmeldenummer: CH9500110
(87) Internationale Veröffentlichungsnummer: WO9531329

(56) Entgegenhaltungen:
- EP-A- 0 515 896
- EP-A- 0 541 821
- WO-A-82/01158
- DE-A- 3 141 069
- DE-A- 3 929 664
- FR-A- 2 273 720
- FR-E- 71 716
- GB-A- 1 016 381
- US-A- 3 001 340
- US-A- 3 069 303
- US-A- 4 352 669
- US-A- 4 568 321

## Beschreibung

Die Erfindung bezieht sich gemäss Anspruch 1 rsp. 10 auf ein Verfahren und eine Vorrichtung zur Herstellung von Beutein sowie auf eine Vorformvorrichtung gemäss Oberbegriff von Anspruch 27.

Ein Beutel der Art, wie er mit der Erfindung hergestellt werden kann, wird zum Beispiel in EP-A-515 896 beschrieben. Der dort gezeigte Beutel ist ein Standbeutel, dessen Seitenwände aus mindestens zwei Folienbahnen hergestellt werden, die in Randbereichen miteinander verbunden sind. Zur Entnahme des Inhalts ist eine Ausgiesseinrichtung vorgesehen, weiche als rohrförmiges Organ im Randbereich des Beutels verschweisst ist.

Die Herstellung solcher Beutel ist nicht einfach. Insbesondere die Einbringung der Ausgiessvorrichtung bei zwei- oder mehrbahniger Beutelherstellung bietet Probleme. So wird zum Beispiel in EP-A-299 562 ein Herstellungsverfahren beschrieben, bei welchem die Ausgiesseinrichtung von unten in den Beutel eingeschoben wird, nachdem dessen Seitenwände bereits teilweise verbunden wurden. Hierbei muss die Ausgiessvorrichtung einen relativ langen Weg durch das Beutelinnere zurücklegen und gut geführt sein, was die Herstellung verlangsamt und kompliziert. Ausserdem kann die Ausgiessvorrichtung nicht in einer beliebigen Lage montiert werden.

Andererseits ist es denkbar, die Ausgiessvorrichtung vor dem Verbinden der Seitenfolien einzuführen. In diesem Fall müssen aber gewisse Arbeitsschritte, die der Vorbereitung der Aufnahme der Ausgiessvorrichtung dienen, an den noch getrennt laufenden Folienbändern durchgeführt werden. Dies ist apparativ relativ aufwendig, da jedes Folienband einzeln zu bearbeiten ist. Ferner ist es sodann nicht einfach, die einzeln vorbearbeiteten Folienbänder genügend genau zueinander zu positionieren.

In US 4 568 321 wird eine Vorrichtung beschrieben, bei welcher die Folienbahnen zum Einbringen der Ausgiessvorrichtung voneinander getrennt und sodann wieder zusammengeführt werden.

In DE-A-39 29 664 und FR-E-71 716 werden Verformungsvorrichtungen offenbart zur Erzeugung einer Mehrzahl von Ausformungen in Folienbahnen, indem die Folienbahnen mit vorgegebenem Druck gegen eine Mehrzahl entsprechender Vertiefungen gedrückt werden. Es zeigt sich jedoch, dass das Strecken der Folien zum Vorformen technisch schwierig, die Qualität der Ausformungen schwer kontrollierbar ist.

Deshalb stellt sich die Aufgabe, ein Herstellungsverfahren rsp. eine Vorrichtung der eingangs genannten Art bereitzustellen, die dieses Problem möglichst vermeiden.

Diese Aufgabe wird von der in den unabhängigen Ansprüchen definierten Erfindung gelöst.

Durch den, auf den ersten Blick etwas komplizierten Verlauf der Folienbänder, welche zuerst aufeinander geführt, dann getrennt, und sodann wieder aufeinander geführt werden, wird es möglich, das Durchführungsmittel bequem und einfach im zweiten Verarbeitungsbereich einzuführen. Andererseits können aber alle nötigen Vorbereitungsschritte im ersten Verarbeitungsbereich an beiden Folienbahnen gemeinsam und gleichzeitig durchgeführt werden.

Das Vorformen der Folienbahnen geschieht mit einer Vorformeinrichtung, bei welcher Bereiche der Folie einer Druckkraft ausgesetzt sind. Die Druckkraft ist mindestens in einem Teil der Ausformungen einzeln regelbar. Auf diese Weise kann auch bei anisotropen und inhomogenen Dehnungseigenschaften der Folie eine definierte Vorformung erreicht werden.

Die Einlegevorrichtung zum Einlegen des Durchführungsmittels wird dabei vorzugsweise möglichst ganz zwischen den Folienbändern angeordnet, so dass der Weg zwischen Einlegevorrichtung und Folienbahn kurz ist und das Einlegen sehr rasch erfolgen kann.

Beim Einlegen wird das Durchführungsmittel vorzugsweise durch geeignete Positioniermittel platziert und an einer der Folienbahnen befestigt, so dass es seine Position beibehält.

Falls die Folienbahnen im ersten Verarbeitungsbereich vorgeschnitten werden, wird es möglich, das Durchführungsmittel so im Beutel anzuordnen, dass es dessen Aussenrand überragt.

Weitere Ausführungen, Vorteile und Anwendungen der Erfindung ergeben sich aus der nun folgenden Beschreibung einer erfindungsgemässen Anlage anhand der Figuren. Dabei zeigen:
Figur 1 eine schematische Seitenansicht einer erfindungsgemässen Anlage zur Beutelherstellung,
Figur 2 eine schematische Ansicht der Anlage von Fig. 1 von oben,
Figur 3 die fertig geformten Folienbahnen bei verlassen der Anlage nach Figur 1,
Figur 4 einen fertigen Beutel,
Figur 5 eine zweite Ausführung eines fertigen Beutels,
Figur 6 einen Schnitt durch die Einlegevorrichtung entlang Linie VI-VI von Figur 1,
Figur 7 einen Schnitt entlang Linie VII-VII von Figur 6,
Figur 8 eine alternative Möglichkeit, die Röhrchen der Einlegestation zuzuführen,
Figur 9 einen Schnitt durch einen Beutel mit einem Röhrchen mit rundem Querschnitt,
Figur 10 einen Schnitt durch die Vorformeinrichtung,
Figur 11 eine Ansicht eines Konturprofils der Vorformeinrichtung, und
Figur 12 einen Schnitt durch einen Beutel mit einem Röhrchen mit linsenförmigem Querschnitt bei der Verschweissung.

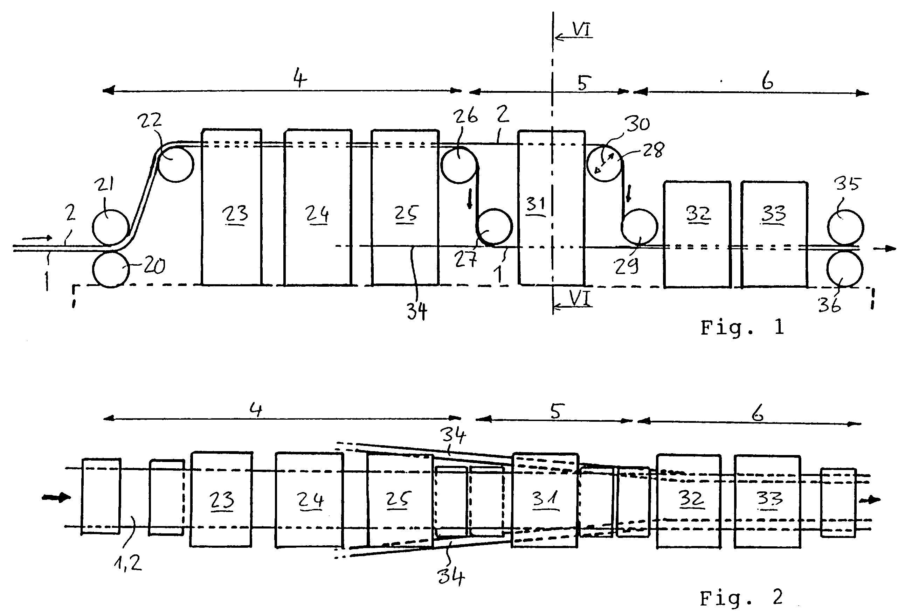

Die Figuren 1 und 2 zeigen schematisch ein Ausführungsbeispiel einer erfindungsgemässen Anlage zur Beutelherstellung. Die Aufgabe dieser Anlage besteht darin, aus Folien eines geeigneten Materials einen Beutel mit Ausgiessvorrichtung zu formen. Im hier gezeigten Beispiel wird hierzu eine Kunststoff-Verbundfolie aus Polyester und Polyethylen mit etwa 100 bis 200 Mikrometer Dicke verarbeitet. Die eine Verbundschicht der Folie hat einen tieferen Schmelzpunkt als die andere, so dass sich die Folie in bekannter Art zur thermischen Bearbeitung eignet. Selbstverständlich eignet sich die Anlage auch zur Verarbeitung anderer Folienarten, wie zum Beispiel Monofilien.

Wie bei bekannten Lösungen wird von einem breiten Folienband ausgegangen, das in einem nicht gezeigten Teil der Anlage mittig aufgeschnitten wird, so dass zwei einzelne Folienbahnen entstehen. Die beiden Folienbahnen werden sodann so zueinander orientiert, dass sich ihre Seiten mit tieferem Schmelzpunkt gegenüber liegen. Eine entsprechende Vorrichtung zum Aufschneiden und Orientieren der Folienbahnen ist z. B. in EP-A-541 821 gezeigt und soll hier nicht näher beschrieben werden.

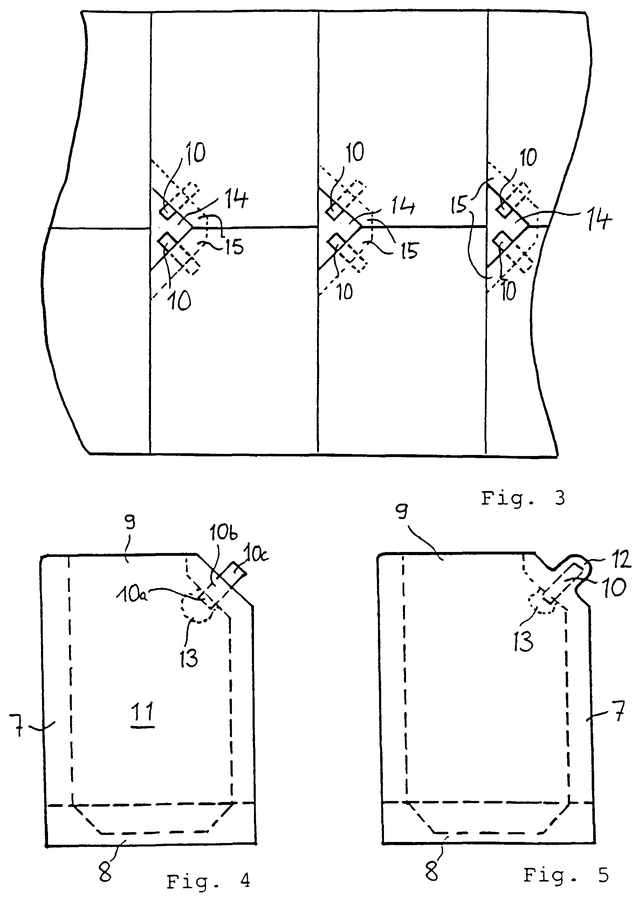

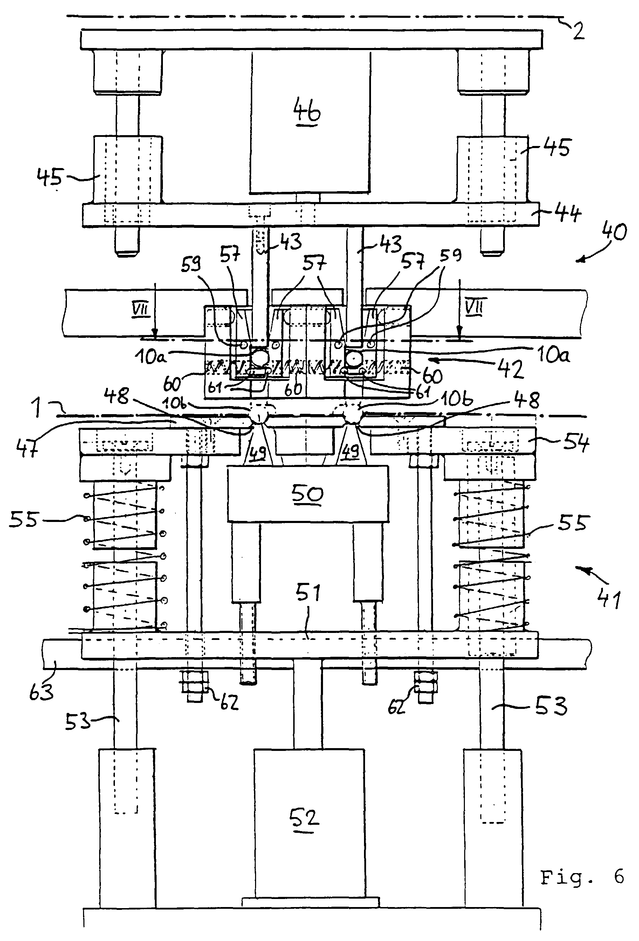

Die so vorbereiteten Folienbahnen 1, 2 werden der Anlage nach Figur 1 und 2 von links zugeführt. Sie durchlaufen drei Verarbeitungsbereiche 4, 5, 6 und verlassen den gezeigten Teil der Anlage als fast fertig geformte Beutel, die noch an den Randbereichen verschweisst und sodann voneinander getrennt werden müssen. Figur 3 zeigt die Folienbahn beim Verlassen der in Figur 1 gezeigten Anlage. Nach dem Verschweissen der Ränder und dem Trennen der Beutel entsteht ein Produkt, wie es in den Figuren 4 oder 5 dargestellt wird. Hierbei handelt es sich zum Beispiel um einen Standbeutel, der aus zwei Folienflächen besteht, welche in Seitenbereichen 7 miteinander und in einem Bodenbereich 8 mit einer Bodenfolie verbunden sind. Ein oberer Randbereich 9 bleibt unverschweisst. Dieser dient als Einfullöffnung und wird erst nach dem Einfüllen geschlossen. In einem Eckbereich der Beutel ist eine Ausgiessvorrichtung angeordnet.

In Figur 3 sind jeweilen zwei Beutel nebeneinander angeordnet und werden gleichzeitig behandelt. Es ist jedoch auch möglich, auch mehr als zwei Beutelbahnen nebeneinander zu legen oder nur mit einer einzigen Beutelbahn zu arbeiten.

Die Ausgiessvorrichtung gemäss Figur 4 besteht aus einem Kunststoffröhrchen 10. Ein inneres Ende 10a des Röhrchens ragt in den Innenraum 11 des Beutels. Der Mittelbereich 10b des Röhrchens ist mit beiden Folienbahnen dichtend verschweisst. Das äussere Ende 10c überragt den Rand des Beutels nach aussen und ist z. B. einseitig nach aussen verschlossen oder mit einem (nicht gezeigten) Deckel abgedichtet.

In Figur 4 ist das Röhrchen 10 in der abgeschnittenen Ecke der Beutel angeordnet. Es ist aber auch möglich, das Röhrchen in einem anderen Randbereich bzw. Bodenbereich anzuordnen.

Das in Figur 5 gezeigte Ausführungsbeispiel eines Beutels ist im wesentlichen gleich aufgebaut. Hier überragt das Röhrchen 10 den Aussenrand des Beutels jedoch nicht. Vielmehr erstreckt sich der Randbereich 7 des Beutels um das äussere Ende des Röhrchens herum und schliesst dieses ab. Zum Oeffnen des Beutels wird der entsprechende Randteil 12 abgeschnitten oder aufgerissen.

Die gezeigten Beutel können ferner eine Ausformung 13 im Bereich des inneren Endes des Röhrchens 10 besitzen, welche einen guten Abfluss des Inhalts sicherstellt. Beutel dieser Art sind z. B. in EP-A-515 896 beschrieben.

Im folgenden soll nun die Funktionsweise der Anlage nach Fig. 1 und 2 zuerst im Ueberblick und sodann im Detail erörtert werden. Dabei wird davon ausgegangen, dass die Maschine zur Herstellung eines Beutels nach Fig. 4 eingerichtet ist.

Wie erwähnt treten die Folienbänder 1, 2 von links in die Anlage ein. Sie können die Anlage kontinuierlich durchlaufen. Im hier gezeigten Ausführungsbeispiel bewegen sie sich aber ruckweise in Arbeitsschritten, so dass jeder Folienabschnitt in den einzelnen Arbeitsstationen kurz verweilt und dann zur nächsten Arbeitsstation bewegt wird. Die hier gezeigte Anlage arbeitet etwa mit 40 bis 60 Arbeitsschritten pro Minute.

Im ersten Verarbeitungsbereich 4 durchlaufen die Folienbahnen 1, 2 ein Antriebsrollenpaar 20, 21 und werden über eine Umlenkrolle 22 durch drei Arbeitsstationen geführt. Bei diesen Arbeitsstationen handelt es sich um eine Erwärmungsvorrichtung 23, eine Vorformeinrichtung 24 und eine Vorschneidevorrichtung 25.

In der Erwärmungsvorrichtung 23 werden Teile der Folie durch Heizstempel, die beidseitig auf das Folienbahnpaar gedrückt werden, bereichsweise vorgewärmt. Die so vorgewärmten Bereiche werden in der Vorformeinrichtung 24 verformt. Die Vorformeinrichtung wird weiter unten genauer beschrieben.

In der Vorschneidevorrichtung 25 werden dreiecksförmige Bereiche 14 (vgl. Figur 3) aus der Mitte der beiden Folienbahnen geschnitten. Hierzu wird ein geeignetes Formmesser durch beide Folienbahnen gedruckt.

Da im ersten Verarbeitungsbereich 4 die beiden Folienbahnen 1 und 2 aneinander Liegen, können die Arbeitsstationen 23, 24 und 25 in einem Arbeitsgang beide Folienbahnen gleichzeitig bearbeiten. Dadurch wird der apparative Aufwand in diesem Bereich verringert.

Nun sind die Folienbahnen bereit zur Aufnahme des Röhrchens 10. Hierzu werden sie voneinander getrennt und parallel durch den zweiten Verarbeitungsbereich 5 geführt. Die untere Folienbahn 1 wird dabei von den Rollen 26 und 27, die obere Folienbahn 2 von den Rollen 28 und 29 umgelenkt. Die Wege, die die beiden Folienbahnen getrennt voneinander zurücklegen, sind gleich lang, so dass am Schluss des zweiten Verarbeitungsbereichs 5 entsprechende Teile der Bahnen wieder genau aufeinander liegen. Zur Feinabstimmung der Weglänge kann eine Rolle, z. B. Rolle 28, wie durch den Doppelpfeil 30 angedeutet verschiebbar angeordnet sein.

Wie aus der Figur 1 ersichtlich ist, verlaufen die Folienbänder 1, 2 im ersten Verarbeitungsbereich 4 höher als im dritten Verarbeitungsbereich 6. Diese nicht-symmetrische Anordnung hat den Vorteil, dass die untere Folie 1 im zweiten und beide Folien 1 und 2 im dritten Verarbeitungsbereich auf bequemer Arbeitshöhe liegen.

Im zweiten Verarbeitungsbereich 5 durchlaufen die Folienbahnen eine Einlegevorrichtung 31. Diese Einlegevorrichtung legt das Röhrchen 10 auf die untere Folie 1 und befestigt es dort. Der Aufbau der Einlegevorrichtung 31 wird weiter unten genauer beschrieben.

Da im zweiten Verarbeitungsbereich 5 die Folien beabstandet voneinander einzeln geführt werden, besteht für diesen Arbeitsgang ausreichend Platz, so dass im wesentlichen die ganze Einlegevorrichtung zwischen den Folien angeordnet werden kann und sich somit nahe an der Stelle befindet, bei welcher die Röhrchen an der Folienbahn befestigt werden. Dadurch wird die Weglänge, die in einem Arbeitstakt von den Röhrchen zurückgelegt werden muss, verringert. Dies erlaubt einen einfacheren und schnelleren Bewegungsablauf.

Am Ende des zweiten Verarbeitungsbereichs 5 werden nun die Folienbahnen 1, 2 zusammengeführt, so dass sie wieder aufeinander anliegen. Gleichzeitig wird von beiden Seiten her ein längsgefaltetes Bodenband 34 zwischen die Folienbahnen 1, 2 eingeführt. Die Bodenbänder 34 kommen mit den Faltkanten nach innen entlang der Ränder der Folienbahnen 1, 2 zu liegen.

Im dritten Verarbeitungsbereich 6 durchlaufen die Folienbahnen 1, 2 eine Verschweissvorrichtung 32 und eine Kühlvorrichtung 33. Die Verschweissvorrichtung 32 verschweisst die beiden Folienbahnen in einem Bereich 15 des Röhrchens 10 untereinander und mit dem Röhrchen. In der Kühlvorrichtung werden die beim Verschweissen erwärmten Bereiche gekühlt.

Im folgenden werden nun die Vorformeinrichtung 24 und die Einlegevorrichtung 31 genauer beschrieben.

Der Aufbau der Einlegevorrichtung 31 ist aus den Figuren 6 und 7 ersichtlich. Ein Hauptteil 40 der Einlegevorrichtung befindet sich zwischen den Folienbahnen 1 und 2. Ein Hilfsteil 41 befindet sich unterhalb der Folienbahn 1.

Im Hauptteil 40 befindet sich eine Halterung 42 zur Aufnahme der Röhrchen in den Positionen 10a. Oberhalb der Halterung 42 ist eine Ausstossvorrichtung angeordnet, welche zwei Ausstossstangen 43 umfasst, die an einer Platte 44 befestigt sind. Die Platte 44 ist vertikal verschiebbar auf Lagern 45 gelagert und kann mit einem Pneumatikzylinder 46 bewegt werden.

Die Halterung 42 umfasst zwei Stationen 10a zur Aufnahme der Röhrchen 10, die von oben gesehen unter einem Winkel von etwa 90° zueinander angeordnet sind (Figur 7). Dieser Winkel ist durch die gegenseitige Lage der Röhrchen zweier benachbarter Beutel gegeben (vgl. Figur 3). Die Röhrchen werden über Zuführungsleitungen 56 angeliefert und zwischen zwei Haltebacken 57 gehalten. Ihre Längsposition wird durch Anschläge 58 definiert. Die Haltebacken sind um horizontale Achsen 59 schwenkbar gelagert und werden an ihren unteren Enden über Federn 60 zusammengedrückt. Jede Haltebacke 57 besitzt eine horizontale Anschlagkante 61 im unteren Bereich ihrer Innenseite.

Der Hilfsteil 41 unterhalb der Folienbahn 1 umfasst eine Führungsplatte 47 mit zwei Oeffnungen 48. Im Bereich dieser Oeffnungen sind zwei Heizkeile 49 angeordnet, die von einem Heizelement 50 erwärmt werden. Das Heizelement 50 ist an einer Montageplatte 51 befestigt, welche von einem Pneumatikzylinder 52 in vertikaler Richtung verschoben werden kann. Die Montageplatte 51 ist mittels zwei Führungsstangen 53 geführt.

Die Führungsplatte 47 ruht auf einer zweiten Montageplatte 54, welche ebenfalls vertikal verschiebbar von den Führungsstangen 53 gehalten und ferner über Federn 55 mit der unteren Montageplatte 51 verbunden ist.

Die maximale Höhe der zweiten Montageplatte 54 rsp. der Führungsplatte 47 wird durch zwei Gewindestangen mit Anschlägen 62 begrenzt, welche gegen eine stationäre Platte 63 stossen, sobald die Führungsplatte 47 ihre maximale Höhe erreicht.

Die Arbeitsweise der Einlegenstation ist die folgende:

Zuerst werden zwei Röhrchen gleichzeitig in die Positionen 10a eingeführt. Sie werden von den Haltebacken 57 und deren Anschlagkanten 61 gehalten. Sodann werden die Ausstossstangen 43 von oben auf die Röhrchen geführt und drücken diese entgegen der Haltekraft der Federn 60 aus der Halterung und in die Positionen 10b. Sobald die Position 10a frei ist, rücken die nächsten Röhrchen nach.

Gleichzeitig oder kurz davor wird der Pneumatikzylinder 52 in Betrieb gesetzt und hebt die Montageplatte 51 und somit die Heizkeile 49 und die Führungsplatte 47 gegen die untere Seite der Folienbahn 1 an. Sobald die Führungsplatte 47 ihre Sollstellung erreicht hat, wird eine weitere Vertikalbewegung durch die Anschläge 62 verhindert. Die Heizkeile 49 werden noch etwas höher geführt.

Die Röhrchen werden dabei zuerst von der Führungsplatte 47 rsp. deren Oeffnungen 48 positioniert. Sodann kommen die Heizkeile 49 mit der Folie in Kontakt und verschweissen diese mit den Röhrchen.

Zum Schluss des Arbeitstaktes ziehen sich die Ausstossstangen 43 zurück und die Montageplatte 51 wird abgesenkt. Somit kommt die Folienbahn 1 frei und kann weitertransportiert werden.

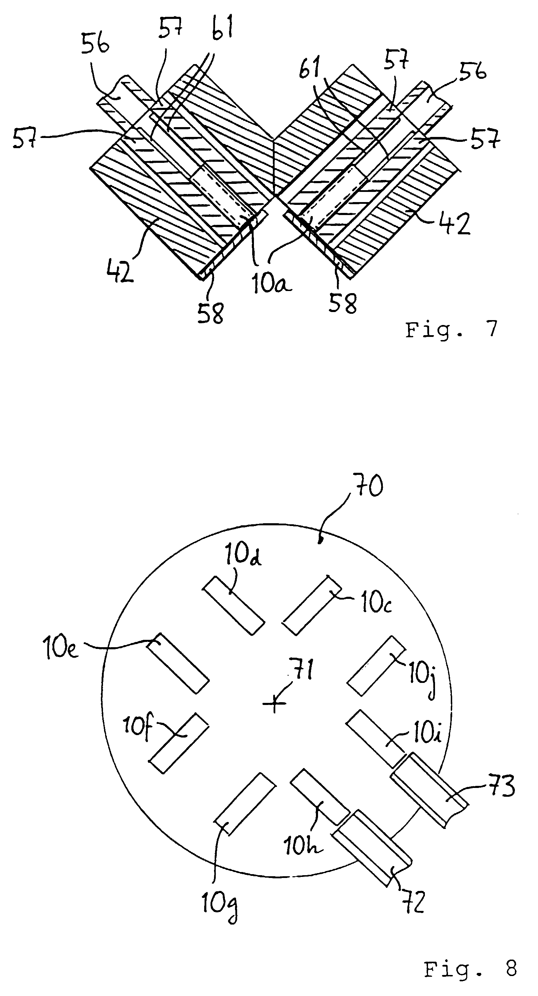

Figur 8 zeigt schematisch eine zweite Möglichkeit, die Röhrchen in die Einlegestation einzuführen. Hierbei handelt es sich um einen Drehteller 70, welcher um eine vertikale Achse 71 gedreht werden kann. Dieser Drehteller ersetzt die Halterung 42. Im Gegensatz zur Halterung 42, auf welcher nur zwei Positionen zur Aufnahme der Röhrchen vorgesehen waren, sind hier nun acht Positionen 10c - 10j mit entsprechenden Halteorganen (nicht gezeigt) für die Röhrchen vorgesehen. Die Positionen 10c und 10d entsprechen dabei den Positionen 10a von Figur 6. Von hier können die Röhrchen mit den Ausstossstangen 43 nach unten gestossen werden.

Die Zuführung der Röhrchen geschieht in den Positionen 10h und 10i, z. B. durch einen Industrieroboter mit Fördersystem 72,73. Da der Drehteller bei jedem Arbeitstakt um 90° gedreht wird, gelangen die so eingebrachten Röhrchen (bei einer Drehung im Gegenuhrzeigersinn) nach zwei rsp. drei Takten in die Auswurfstellungen 10c und 10d.

Der Vorteil der Ausführung nach Figur 8 liegt darin, dass zum Einbringen der Rohrchen in die Einlegestation ein voller Arbeitstakt zur Verfügung steht.

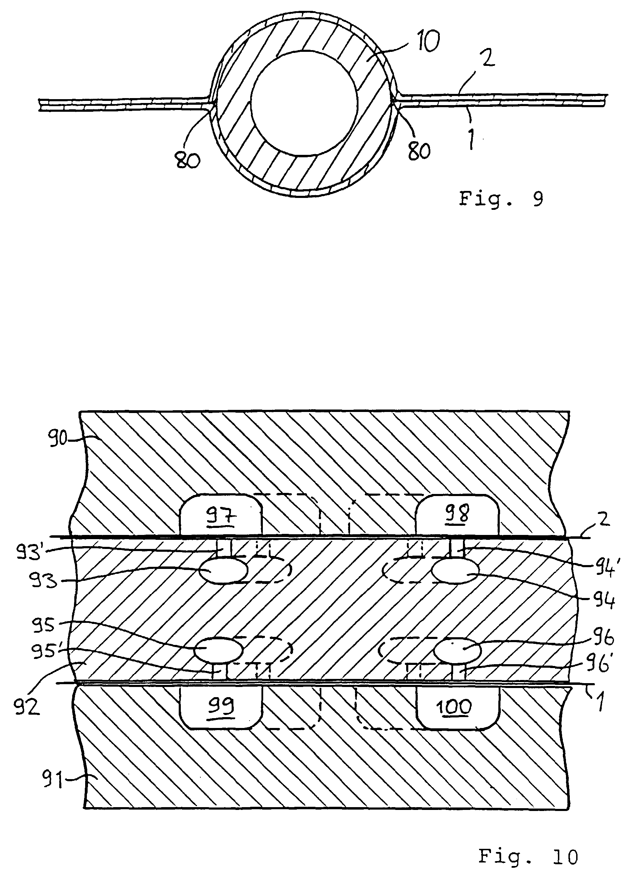

Wie bereits erwähnt wurde, ist im ersten Verarbeitungsbereich 4 eine Vorformeinrichtung 24 mit Erwärmungsvorrichtung 23 vorgesehen sein. Diese Einrichtung wird eingesetzt, um den Folienbereich vorzuformen, in welchem das Röhrchen zu liegen kommt. So kann zum Beispiel die Ausbuchtung 13 (Fig. 4, 5) hergestellt werden. Je nach Folienmaterial und Röhrchenprofil kann es sich als vorteilhaft erweisen, dass man die Folie so vordehnt, dass sie der Oberfläche des einzusetzenden Röhrchens folgt, was den Faltenwurf in der Folie vermindert und die Abdichtung verbessert. Dies ist insbesondere aus der Figur 9 ersichtlich. Diese Figur zeigt einen Schnitt durch ein in den Beutel eingeschlossenes Röhrchen mit rundem Querschnitt. Insbesondere in den Punkten 80 ist es schwierig, eine gute Abdichtung zwischen dem Röhrchen 10 und den Folien 1, 2 zu erreichen, da hierzu das Folienmaterial in diesem Bereich stark gedehnt werden muss. Durch eine Vorformung rsp. Vorstreckung des Folienmaterials wird dieses Problem reduziert.

Deshalb ist in der Anlage gemäss Figur 1 rsp. Figur 2 optional eine Vorformeinrichtung 24 vorgesehen. Diese wird in den Figuren 10 und 11 gezeigt.

Die Vorformeinrichtung umfasst zwei Konturprofile 90, 91, welche beidseits einer Platte 92 mit Luftdruckkanälen 93 - 96 angeordnet sind. Zwischen den Konturprofilen 90, 91 und der Platte 92 verlaufen die beiden Folienbahnen 1 und 2.

Die Konturprofile 90, 91 bestehen aus Metallplatten, in welchen Vertiefungen 97 - 100 geeigneter Form eingebracht sind.

Zum Vorformen werden die Folien 1, 2 zunächst in Station 23 in den vorzuformenden Bereichen erwärmt. Dann werden sie zur Vorformeinrichtung 24 gebracht, wo sie zwischen den vertikal beweglichen Konturprofilen 90, 91 und der Platte 92 eingeklemmt werden. Dann wird durch die Druckluftkanäle 93 - 96 Druckluft eingespeist, die über die Oeffnungen 93' - 96' austritt und die Folie in die Ausformungen 97 - 100 drängt. Dadurch wird die gewünschte Steckung des Folienmaterials erreicht.

Es hat sich gezeigt, dass die Wahl eines geeigneten Drucks der Druckluft schwierig ist. Dies ist darauf zurückzuführen, dass die beiden Folien unterschiedliche Dehnungseigenschaften haben, welche zudem richtungsabhängig sind. Deshalb hat es sich als sinnvoll erwiesen, getrennte Druckregelventile für die Zuleitungen 93 - 96 vorzusehen. Auf diese Weise kann der Druck für jede Ausformung einzeln abgestimmt werden.

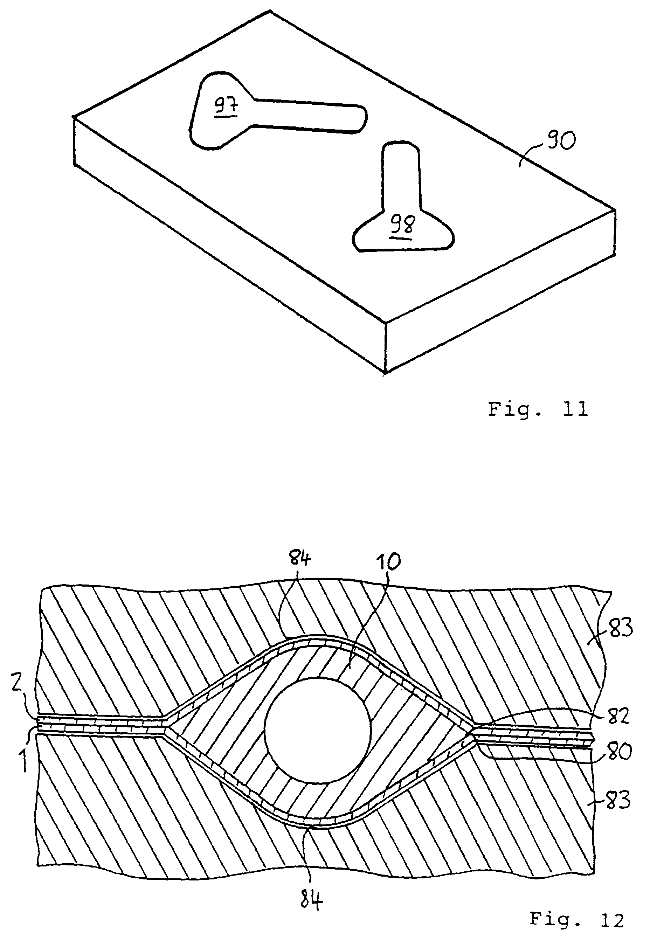

Die Verschweissung zwischen Röhrchen und Folien geschieht in der Verschweissvorrichtung 32. Wie in Figur 12 gezeigt wird, werden dabei zwei Schweissbacken 83 von beiden Seiten auf die Folienbahnen 1, 2 gedrückt. Die Schweissbacken weisen Ausnehmungen 84 auf, die der Aussenform des Röhrchens 10 angepasst sind.

Vorzugsweise geschieht die Verschweissung in zwei Arbeitsschritten, in denen die Beutel jeweilen von gleich aufgebauten Schweissbacken verschweisst werden. Dadurch steht die doppelte Zeit zur Zuführung der Verschweisswärme zur Verfügung, was eine Erhöhung des Arbeitstakts erlaubt.

Die in Figur 1 dargestellte Anlage kann in vielen Punkten abgeändert werden. Wie bereits erwähnt wurde, kann zum Beispiel die Erwärmungsvorrichtung 23 entfallen. Auch die Vorschneidevorrichtung 25 kann entfallen, insbesondere wenn das Röhrchen 10 nicht über den äusseren Rand des Beutels ragen soll, wie es in Figur 5 gezeigt wird.

Die Verwendung der Vorformeinrichtung 24, wie sie in Figur 10 gezeigt wird, ist nicht auf die in Figur 1 gezeigte Anlage beschränkt. Die Vorformeinrichtung, bei welcher der Druck im Bereich jeder Ausformung einzeln eingestellt wird, ist überall dort einsetzbar, wo mehrere Ausformungen in eine oder mehrere Folien eingebracht werden müssen. Wie erwähnt ist der Einsatz dieser Einrichtung insbesondere dann sinnvoll, wenn die Ausformungen verschiedene Form oder unterschiedliche Orientierung haben und/oder die Dehnungseigenschaften der Folie anisotrop oder inhomogen sind.

## Patentansprüche

1. Verfahren zur Herstellung von Beuteln, wobei die Beutel durch Aneinanderfügen mindestens zweier separater Folienbahnen (1,2) und durch Verbinden dieser Folienbahnen in einem Randbereich gebildet werden, und wobei im Randbereich ein Durchführungsmittel (10) angeordnet ist, wobei die Folienbahnen nacheinander einen ersten, einen zweiten und einen dritten Verarbeitungsbereich (4,5,6) durchlaufen, wobei sie im ersten Verarbeitungsbereich (4) aufeinander liegen, im zweiten Verarbeitungsbereich (5) beabstandet geführt werden, wobei ein Bereich zwischen den Folien frei zugänglich ist und wobei das Durchführungsmittel (10) zwischen die Folienbahnen (1,2) eingebracht wird, und im dritten Verarbeitungsbereich (6) wieder aufeinander liegen, wobei im ersten Verarbeitungsbereich (4) zur Aufnahme des Durchführungsmittels (10) in mindestens einer der Folienbahnen (1,2) eine Mehrzahl von Ausformungen vorgeformt werden, indem die jeweilige Folienbahn (1,2) mit gegebenem Anpressdruck gegen eine konturgebende Oberfläche (90, 91) gedrückt wird, und wobei der Anpressdruck für mindestens einen Teil der Ausformungen einzeln bestimmt wird.

2. Verfahren nach Anspruch 1, dadurch gekennzeichnet, dass im ersten und im dritten Verarbeitungsbereich (4,6) die Folienbahnen (1,2) mittels gemeinsamer Führungsorgane (20,21,22,35,36) geführt werden und dass im zweiten Verarbeitungsbereich jede Folienbahn mit eigenen Führungsorganen (26 bis 29) geführt wird.

3. Verfahren nach einem der vorangehenden Ansprüche, dadurch gekennzeichnet, dass die Folienbahnen (1,2) im dritten Verarbeitungsbereich (6) miteinander verbunden werden.

4. Verfahren nach einem der vorangehenden Ansprüche, dadurch gekennzeichnet, dass das Durchführungsmittel (10) ein Röhrchen ist, welches im zweiten Verarbeitungsbereich (5) an einer der Folienbahnen (1) in einer gewünschten Position befestigt wird, und dass im dritten Verarbeitungsbereich (6) die Folienbahnen (1,2) im Bereich (15) des Röhrchens miteinander und mit dem Röhrchen verschweisst werden.

5. Verfahren nach einem der vorangehenden Ansprüche, dadurch gekennzeichnet, dass die Folienbahnen (1,2) im ersten Verarbeitungsbereich (4) vorgeschnitten werden.

6. Verfahren nach Anspruch 5, dadurch gekennzeichnet, dass der Randbereich, in welchem das Durchführungsmittel (10) zu liegen kommt, im ersten Verarbeitungsbereich (4) vorgeschnitten wird, und dass das Durchführungsmittel (10) so positioniert wird, dass es den Randbereich gegen aussen überragt.

7. Verfahren nach Anspruch 5, dadurch gekennzeichnet, dass die Folienbahnen zuerst vorgeformt und dann vorgeschnitten werden.

8. Verfahren nach einem der vorangehenden Ansprüche, dadurch gekennzeichnet, dass im zweiten und/oder dritten Verarbeitungsbereich (5,6) eine Bodenfolienbahn (34) zur Bildung eines Bodens der Beutel zwischen die beiden Folienbahnen (1,2) eingeführt wird.

9. Verfahren nach einem der vorangehenden Ansprüche, dadurch gekennzeichnet, dass auf den Folienbahnen (1,2) jeweils zwei Beutel nebeneinander hergestellt werden, wobei deren Durchführungsmittel (10) benachbart zueinander angeordnet werden.

10. Vorrichtung zur Herstellung von Beuteln durch Aneinanderfügen mindestens zweier separater Folienbahnen (1,2) und durch Verbinden dieser Folienbahnen in einem Randbereich, wobei im Randbereich ein Durchführungsmittel (10) angeordnet ist, wobei die Folienbahnen (1,2) so durch die Vorrichtung geführt sind, dass sie nacheinander in einem ersten Verarbeitungsbereich (4) aufeinander liegen, in einem zweiten Verarbeitungsbereich (5) beabstandet geführt sind, und in einem dritten Verarbeitungsbereich (6) wieder aufeinander liegen, wobei im zweiten Verarbeitungsbereich (5) eine Einlegevorrichtung (31) angeordnet ist, mittels welcher das Durchführungsmittel (10) zwischen die Folien einbringbar ist, wobei im ersten Verarbeitungsbereich eine Vorformeinrichtung (24) angeordnet ist, mittels welcher mindestens eine der Folienbahnen (1,2) verformbar ist, wobei in der Vorformeinrichtung (24) zur Erzeugung einer Mehrzahl von Ausformungen mindestens eine der Folienbahnen (1,2) gegen eine Mehrzahl entsprechender Vertiefungen (97-100) drückbar ist, wobei im Bereich jeder Vertiefung ein gegebener Druck erzeugbar ist und wobei mindestens zwei unabhängige Druckeinstellmittel vorgesehen sind, mit denen der Druck für mindestens einen Teil der Vertiefungen einzeln einstellbar ist.

11. Vorrichtung nach Anspruch 10, dadurch gekennzeichnet, dass im ersten und im dritten Verarbeitungsbereich (4,6) gemeinsame Führungsorgane (20-22, 35, 36) für beide Folienbahnen (1,2) und im zweiten Verarbeitungsbereich (5) getrennte Führungsorgane (26-29) für jede Folienbahn (1,2) vorgesehen sind.

12. Vorrichtung nach einem der Ansprüche 10 oder 11, dadurch gekennzeichnet, dass im zweiten Verarbeitungsbereich (5) eine Befestigungsvorrichtung angeordnet ist, mittels welcher das Durchführungsmittel an einer der Folienbahnen (1) befestigbar ist.

13. Vorrichtung nach Anspruch 12, dadurch gekennzeichnet, dass die Befestigungsvorrichtung eine Anschweissvorrichtung (49) umfasst.

14. Vorrichtung nach einem der Ansprüche 10 bis 13, dadurch gekennzeichnet, dass die Einlegevorrichtung (31) im wesentlichen zwischen den Folienbahnen (1,2) angeordnet ist.

15. Vorichtung nach einem der Ansprüche 10 bis 14, dadurch gekennzeichnet, dass die Einlegevorrichtung (31) ein Andrückorgan (43-46) aufweist, mittels welchem die Durchführungsmittel (10) gegen eine Innenseite einer ersten (1) der Folienbahnen andrückbar ist.

16. Vorrichtung nach den Ansprüchen 13 und 15, dadurch gekennzeichnet, dass die Anschweissvorrichtung (49) auf der dem Andrückorgan (43-46) gegenüberliegenden Aussenseite der ersten Folienbahn (1) angeordnet ist.

17. Vorrichtung nach Anspruch 16, dadurch gekennzeichnet, dass bei der Aussenseite der ersten Folienbahn (1) Positionierorgane (47,48) zur Positionierung mindestens eines an die erste Folienbahn (1) angedrückten Durchführungsmittels (10) vorgesehen sind.

18. Vorrichtung nach Anspruch 17, dadurch gekennzeichnet, dass die Positionierorgane (47,48) senkrecht zur Aussenseite der ersten Folienbahn (1) bewegbar sind und Vertiefungen (48) zur Positionierung der angedrückten Durchführungsmittel (10) aufweisen.

19. Vorrichtung nach einem der Ansprüche 15 bis 18, dadurch gekennzeichnet, dass mit dem Andruckorgan zwei Durchführungsmittel (10) gleichzeitig an die Folienbahnen andrückbar sind.

20. Vorrichtung nach einem der Ansprüche 10 bis 19, dadurch gekennzeichnet, dass im ersten Verarbeitungsbereich (4) eine Vorschneidevorrichtung (25) zum teilweisen Schneiden der Folienbahnen (1,2) angeordnet ist.

21. Vorrichtung nach einem der Ansprüche 10 bis 20, dadurch gekennzeichnet, dass pro Ausformung je ein Druckeinstellmittel vorgesehen ist, mit welchem der Druck in der Ausformung einstellbar ist.

22. Vorrichtung nach einem der Ansprüche 10 bis 21, dadurch gekennzeichnet, dass mit der Vorformeinrichtung beide Folienbahnen verformbar sind und dass die Vorformeinrichtung eine zwischen den Folienbahnen angeordnete Druckerzeugungsplatte (92) sowie beidseits der Druckerzeugungsplatte und auf Aussenseiten der Folienbahnen angeordnete Formteile (90,91) aufweist.

23. Vorrichtung nach einem der Ansprüche 10 bis 22, dadurch gekennzeichnet, dass im ersten und dritten Verarbeitungsbereich (4,6) Rollenpaare (20,21,35, 36) vorgesehen sind, wobei die Folienbahnen (1,2) zwischen den Rollen jedes Rollenpaares verlaufen, dass vier voneinander beabstandete Einzelrollen (26-29) vorgesehen sind, wobei eine untere (1) der Folienbahnen von einer ersten (26) und einer zweiten (27) der Einzelrollen und eine obere (2) der Folienbahnen von einer dritten (28) und einer vierten (29) der Einzelrollen abgelenkt wird, und dass die zweite und dritte Einzelrolle (27, 28) im zweiten Arbeitsbereich zwischen den Folienbahnen angeordnet sind, wobei die dritte Einzelrolle (28) höher als die zweite Einzelrolle (27) angeordnet ist.

24. Vorrichtung nach einem der Ansprüche 10 bis 23, dadurch gekennzeichnet, dass die Folienbahnen (1,2) im ersten Verarbeitungsbereich (4) höher verlaufen als im dritten Verarbeitungsbereich (6).

25. Vorrichtung nach einem der Ansprüche 10 bis 24, dadurch gekennzeichnet, dass die Einlegevorrichtung (31) mehrere Zwischenlagerstationen (10c-10j) zur Zwischenlagerung von Durchführungsmitteln (10) aufweist.

26. Vorrichtung nach Anspruch 25, dadurch gekennzeichnet, dass Zuführungsmittel (72,73) vorgesehen sind, mittels welchen die Durchführungsmittel in einen ersten Teil (10h, 10i) der Zwischenlagerstationen einbringbar sind, und dass Auswurfmittel (43) vorgesehen sind, mittels welchen die Durchführungsmittel aus einem zweiten Teil (10c, 10d) der Zwischenlagerstationen entnehmbar sind, wobei die Durchführungsmittel vom ersten Teil (10h, 10i) der Zwischenlagerstationen in den zweiten Teil (10c, 10d) der Zwischenlagerstationen transportierbar sind.

27. Vorformeinrichtung für eine Vorrichtung zur Herstellung von Beuteln durch Aneinanderfügen mindestens zweier separater Folienbahnen (1,2) und durch Verbinden dieser Folienbahnen in einem Randbereich, wobei im Randbereich ein Durchführungsmittel (10) angeordnet ist, wobei in der Vorformeinrichtung (24) zur Erzeugung einer Mehrzahl von Ausformungen mindestens eine der Folienbahnen (1, 2) gegen eine Mehrzahl entsprechender Vertiefungen (97-100) drückbar ist, und wobei im Bereich jeder Vertiefung ein gegebener Druck erzeugbar ist, dadurch gekennzeichnet, dass mindestens zwei unabhängige Druckeinstellmittel vorgesehen sind, mit denen der Druck für mindestens einen Teil der Vertiefungen einzeln einstellbar ist.

28. Vorrichtung nach Anspruch 27, dadurch gekennzeichnet, dass pro Ausformung je ein Druckeinstellmittel vorgesehen ist, mit welchem der Druck in der Ausformung einstellbar ist.

29. Vorrichtung nach einem der Ansprüche 27 oder 28, dadurch gekennzeichnet, dass mit der Vorformeinrichtung beide Folienbahnen verformbar sind und dass die Vorformeinrichtung eine zwischen den Folienbahnen angeordnete Druckerzeugungsplatte (92) sowie beidseits der Druckerzeugungsplatte und auf Aussenseiten der Folienbahnen angeordnete Formteile (90,91) aufweist.

## Claims

1. Method for producing bags, wherein the bags are formed by adjoining at least two foil webs (1, 2) and by connecting said foil webs in an edge region, and wherein in said edge region a duct means (10) is arranged, wherein said foil webs consecutively run through a first, a second and a third processing area (4, 5, 6), wherein they lie on top of each other in the first processing area (4),are guided at a distance from each other in the second processing area, wherein an area between the foil webs is freely accessible and wherein the duct means (10) is brought in between said foil webs (1,2) and lie again on top of each other in the third processing area (6) wherein a plurality of bulges are pre-formed in at least one of the foil webs (1,2) in the first processing area (4) for receiving the duct means (10) by pressing the respective foil web (1, 2) with a given pressure against a contoured surface (90,91), and wherein the pressure is adjusted individually for at least a part of the depressions.

2. Method of claim 1 characterised in that in the first and the third processing areas (4, 6) the foil webs (1, 2) are guided by means of common guiding means (20, 21, 22, 35, 36) and that in the second processing area each foil web is guided by its own guiding means (26 to 29).

3. Method of one of the preceding claims characterised in that the foil webs (1,2) are connected to each other in the third processing area (6).

4. Method of one of the preceding claims characterised in that the duct means (10) is a tube, which is attached in a desired position to one of the foil webs (1) in the second processing area (5) and that in the third processing area (6) the foil webs (1, 2) are welded to each other and to the tube in the region of the tube.

5. Method of one of the preceding claims characterised in that the foil webs are pre-cut in the first processing area (4).

6. Method of claim 5, characterised in that the edge region where the duct means (10) is placed is pre-cut in the first processing area (4) and that the duct means (10) is positioned to extend outwardly beyond the edge region.

7. Method of claim 5 characterised in that the foil webs are first pre-formed and then pre-cut.

8. Method of one of the preceding claims characterised in that in the second and/or the third processing area (5,6) a bottom foil web (34) for forming a bottom of said bags is introduced between said foil webs (1,2).

9. Method of one of the preceding claims characterised in that two rows of bags lying beside each other are produced on said foil webs (1,2), wherein the duct means (10) of bags of said two rows of webs (10) are arranged adjacent to each other.

10. Apparatus for making bags, said bags being formed by adjoining at least two foil webs (1,2) and by connecting said foil webs in an edge region, wherein a duct means (10) is arranged in the edge region, wherein the foil webs (1,2) are led through the apparatus such that the foil webs consecutively lie on top of each other in a first processing area (4), are guided at a distance from each other in a second processing area (5), and lie again on top of each other in a third processing area (6), wherein the second processing area (5) comprises an insertion device (31) inserting the duct means (10) into an area between the foil webs, wherein in the first processing area a pre-former (24) for deforming at least one of the foil webs (1,2) is arranged, wherein in the preformer (24) at least one of the foil webs (1,2) is press-able against a plurality of corresponding recesses (97-100) for forming a plurality of depressions, wherein in the area of each of the recesses a given pressure can be generated, wherein at least two independent pressure regulator means are provided by means of which the pressure for at least part of the depressions can be adjusted individually.

11. Apparatus of claim 10 characterised in that in the first and the third processing area (4,6) common guiding means (20-22, 35, 36) are provided for both foil webs (1, 2) and in the second processing area (5) separate guiding means (26-29) are provided for each foil web (1, 2).

12. Apparatus of one of the claims 10 or 11 characterised in that in the second processing area (5) an attaching means is provided for attaching the duct means to one of the foils webs (1).

13. The apparatus of claim 12 characterised in that the attaching means comprises a welding device (49).

14. Device of one of the claims 10 to 13 characterised in that the insertion device (31) is substantially arranged between the foil webs (1,2).

15. Apparatus of one of the claims 10 to 14 characterised in that the insertion device (31) comprises a pressing means (43-46) for pressing the duct means (10) against an inner side of a first (1) of the foil webs.

16. Apparatus of the claims 13 and 15 characterised in that the welding device (49) is arranged on a outer side of the first foil web (1) being opposite to the pressing means (43-46).

17. Apparatus of claim 16 characterised in that positioning means (47,48) are arranged at the outer side of the first foil web (1) for positioning at least one of the duct means (10) pressed against the first foil web (1).

18. Apparatus of claim 17 characterised in that the positioning means (47,48) are movable perpendicularly to the outer side of the first foil web (1) and comprise recesses (48) for positioning the channel means (10) pressed against the first foil web.

19. Apparatus of one of the claims 15 to 18 characterised in that the pressing means is designed for pressing two of the duct means (10) simultaneously against the foil webs.

20. Apparatus of one of the claims 10 to 19 characterised in that in the first processing area (4) a pre-cutter (25) for partially pre-cutting the foil webs (1,2) is arranged.

21. Apparatus of one of the claims 10 - 20 characterised in that one pressure regulator means is provided for each depression for adjusting the pressure in the depression.

22. The apparatus of one of the claims 10 to 21 characterised in that both foil webs can be pre-formed by the pre-former and that the pre-former comprises a pressure generating plate (92) arranged between the foil webs as well as moulding parts (90,91) arranged on both sides of the pressure generating plate on outer side of the foil webs.

23. Apparatus of one of the claims 10 to 22 characterised in that in the first and the third processing areas (4,6) pairs of rollers (20,21,35,36) are provided, wherein the foil webs are running between the rollers of each pair of rollers, and that four individual, spaced apart rollers (27,28) are provided, wherein a lower (1) of the foil webs is deflected by a first (26) and a second (27) of the individual rollers and an upper (2) of the fail webs is deflected by a third (28) and a forth (29) of the individual rollers, and that the second and third individual roller (27, 28) are arranged in the second processing area between the foil webs, wherein the third individual roller (28) is arranged higher than the second individual roller (27).

24. The apparatus of one of the claims 10 to 23 characterised in that the foil webs (1,2) are running higher in the first processing area (4) than in the third processing area (6).

25. Apparatus of one of the claims 10 to 24 characterised in that the insertion device (31) comprises a plurality of intermediate storage locations (10c - 10j) for intermediate storage of the duct means (10).

26. Apparatus of claim 25 characterised in that feeding means (72, 73) are provided for feeding the duct means to a first part (10h, 10i) of the intermediate storage locations and that ejection means (43) are provided for taking the duct means from a second part (10c, 10d) of the intermediate storage locations, wherein the duct means (10) are transportable from the first part (10h, 10i) of the intermediate storage locations to the second part (10c, 10d) of the intermediate storage locations.

27. Pre-former for an apparatus for producing bags by adjoining at least two separate foil webs (1,2) and by connecting these foil webs in an edge region, wherein a duct means (10) is arranged in the edge region, wherein in the pre-former (24) at least one of the foil webs (1,2) is pressable against a plurality of corresponding recesses (97-100) for forming a plurality of depressions, wherein in an area of each of the recesses a given pressure can be generated, characterised in that at least two independent pressure regulator means are provided, by means of which the pressure for at least part of the recesses can be adjusted individually.

28. Apparatus of claim 27 characterised in that one pressure regulator means is provided for each depression for adjusting the pressure in the depression.

29. The apparatus of one of the claims 27 or 28 characterised in that both foil webs can be pre-formed by the pre-former and that the pre-former comprises a pressure generating plate (92) arranged between the foil webs as well as moulding parts (90,91) arranged on both sides of the pressure generating plate on outer side of the foil webs.

## Revendications

1. Procédé pour la fabrication de sachets, ceux-ci étant réalisés par accolement d'au moins deux feuillets distincts d'un matériau en bande (1, 2) et par réunion de ces bandes le long d'une région marginale, un moyen formant passage (10) étant disposé dans cette région, les bandes parcourant un premier, un second et un troisième poste de travail (4, 5, 6) et reposant l'une sur l'autre dans le premier poste de travail (4), puis étant guidées à distance l'une de l'autre dans le second poste de travail (5) où une région située entre les feuillets est librement accessible et où le moyen formant passage (10) est placé entre les bandes (1, 2), celles-ci reposant ensuite à nouveau l'une sur l'autre dans le troisième poste de travail (6), plusieurs bosses pour recevoir le moyen formant passage (10) étant formées au premier poste de travail (4) dans au moins une des bandes (1, 2) en appliquant la bande en question avec une pression donnée contre une surface (90, 91) formant un contour, la pression d'application étant déterminée individuellement pour au moins une partie des bosses.

2. Procédé selon la revendication 1, caractérisé en ce que les bandes (1, 2) sont guidées dans le premier et le troisième poste de travail (4, 6) par des organes de guidage communs (20, 21, 22, 35, 36) et que dans le second poste de travail chaque bande est guidée par des organes de guidage qui lui sont propre (26 à 29).

3. Procédé selon l'une des revendications précédentes, caractérisé en ce que les bandes de matériau (1, 2) sont réunies l'une à l'autre dans le troisième poste de travail (6).

4. Procédé selon l'une des revendications précédentes, caractérisé en ce que le moyen formant passage (10) est un petit tube que l'on fixe au second poste de travail (5) en une position désirée sur l'une des bandes (1), et qu'au troisième poste de travail (6) les bandes (1, 2) sont soudées l'une à l'autre ainsi qu'au tube dans la région (15) du tube.

5. Procédé selon l'une des revendications précédentes, caractérisé en ce que les bandes de matériau (1, 2) sont prédécoupées au premier poste de travail (4).

6. Procédé selon la revendication 5, caractérisé en ce que la partie marginale prévue pour la pose du moyen formant passage (10) est prédécoupée du premier poste de travail (4) et que l'on positionne le moyen formant passage (10) de façon à ce qu'il dépasse la partie marginale vers l'extérieur.

7. Procédé selon la revendication 5, caractérisé en ce que les bandes sont d'abord mises en forme, puis prédécoupées.

8. Procédé selon l'une des revendications précédentes, caractérisé en ce qu'au second et/ou au troisième poste de travail (5, 6) une bande formant feuillet de fond (34) est insérée entre les deux bandes (1, 2) pour former le fond du sachet.

9. Procédé selon l'une des revendications précédentes, caractérisé en ce que l'on forme toujours deux sachets côte à côte sur les bandes (1, 2), leurs moyens formant passages (10) étant disposés au voisinage l'un de l'autre.

10. Appareillage pour la fabrication de sachets réalisés par accolement d'au moins deux bandes distinctes (1, 2) de matériau en feuille et par réunion de ces bandes le long d'une région marginale, un moyen de passage (10) étant disposé dans cette région, les bandes (1, 2) traversant l'appareillage de manière à d'abord reposer l'une sur l'autre à un premier poste de travail (4), puis à être guidées à distance l'une de l'autre en un second poste de travail (5), et à ensuite reposer à nouveau l'une sur l'autre en un troisième poste de travail (6), le second poste de travail (5) comportant un dispositif de placement (31) destiné à placer le moyen formant passage (10) entre les bandes, un dispositif de préformage (24) étant agencé au premier poste de travail pour préformer au moins une des bandes (1, 2), au moins une des bandes (1, 2) pouvant être pressée contre plusieurs creux (97-100) dans le dispositif de préformage (24) afin de produire plusieurs déformations correspondantes de cette bande, une pression déterminée pouvant être produite dans le domaine de chaque creux et au moins deux régulateurs de pression indépendants étant prévus au moyen desquels la pression pour au moins une partie des creux peut être réglée individuellement.

11. Appareillage selon la revendication 10, caractérisé en ce qu'il comporte au premier et au troisième poste de travail (4, 6) des organes de guidage communs (20-22, 35, 36) pour les deux bandes (1, 2), et au second poste de travail (5) des organes de guidage séparés (26-29) pour chacune des bandes (1, 2).

12. Appareillage selon une des revendications 10 ou 11, caractérisé en ce que le second poste de travail (5) comporte un dispositif de fixation permettant de fixer le moyen formant passage sur l'une des bandes (1).

13. Appareillage selon la revendication 12, caractérisé en ce que le dispositif de fixation est un dispositif de soudure (49).

14. Appareillage selon l'une des revendications 10 à 13, caractérisé en ce que le dispositif de placement (31) est agencé essentiellement entre les bandes (1, 2).

15. Appareillage selon l'une des revendications 10 à 14, caractérisé en ce que le dispositif de placement (31) comporte un organe de pression (43-46) permettant de presser le moyen formant passage (10) contre un côté intérieur d'une première bande (1).

16. Appareillage selon les revendications 13 et 15, caractérisé en ce que le dispositif de soudure (49) est placé du côté extérieur de la première bande (1), face à l'organe de pression (43-46).

17. Appareillage selon la revendication 16, caractérisé en ce que des organes de positionnement (47, 48) pour positionner au moins un moyen formant passage (10) pressé contre la première bande (1) sont prévus près du côté extérieur de cette première bande (1).

18. Appareillage selon la revendication 17, caractérisé en ce que les organes de positionnement (47, 48) sont mobiles orthogonalement au côté extérieur de la première bande (1) et comportant des creux (48) pour positionner les moyens formant passage (10) lorsqu'une pression est exercée sur eux.

19. Appareillage selon une des revendications 15 à 18, caractérisé en ce que deux moyens formant passage (10) peuvent être simultanément pressés contre la bande par l'organe de pression.

20. Appareillage selon l'une des revendications 10 à 19, caractérisé en ce que le premier poste de travail (4) comporte un dispositif de prédécoupage (25) pour partiellement découper les bandes (1, 2).

21. Appareillage selon l'une des revendications 10 à 20, caractérisé en ce qu'il est prévu pour chaque déformation un régulateur de pression permettant de régler la pression à l'endroit de la déformation.

22. Appareillage selon l'une des revendications 10 à 21, caractérisé en ce que les deux bandes peuvent être déformées par le dispositif de préformage, et que celui-ci comporte une plaque de pression (92) disposée entre les bandes ainsi que des organes de formage (90, 91) agencés des deux côtés de la plaque de pression, des côtés extérieurs des bandes.

23. Appareillage selon l'une des revendications 10 à 22, caractérisé en ce que le premier et le troisième poste de travail (4, 6) comportent des paires de rouleaux (20, 21, 35, 36), les bandes (1, 2) défilant entre les rouleaux de chaque paire, en ce que quatre rouleaux (26 - 29) individuels disposés à distance les uns des autres sont prévus, une bande inférieure (1) étant déviée par un premier (26) et un second (27) rouleau individuel, et une bande supérieure (2) étant déviée par un troisième (28) et un quatrième (29) rouleau individuel, et en ce que le second et le troisième rouleau individuel (27, 28) sont disposés entre les bandes dans le second poste de travail, le troisième rouleau individuel (28) étant placé plus haut que le second rouleau individuel (27).

24. Appareillage selon l'une des revendications 10 à 23, caractérisé en ce que les trajectoires des bandes (1, 2) dans le premier poste de travail (4) sont situées plus haut que leurs trajectoires dans le troisième poste de travail (6).

25. Appareillage selon l'une des revendications 10 à 24, caractérisé en ce que le dispositif de placement (31) comprend plusieurs dépôts intermédiaires (10c-10j) pour le stockage intermédiaire de moyens formant passage (10).

26. Appareillage selon la revendication 25, caractérisé en ce qu'il comprend des moyens d'amenée (72, 73) au moyen desquels les moyens formant passage sont amenés en un premier emplacement (10h, 10i) des dépôts intermédiaires, ainsi que des moyens d'éjection (43) pour extraire les moyens formant passage d'un second emplacement (10c, 10d) des dépôts intermédiaires, ces moyens formant passage pouvant être transportés du premier (10h, 10i) au second emplacement (10c, 10d) des dépôts intermédiaires.

27. Dispositif de formage pour un appareillage pour la fabrication de sachets par accolement d'au moins deux bandes distinctes (1, 2) et par réunion de ces bandes le long d'une région marginale, un moyen de passage (10) étant disposé dans cette région, au moins une des bandes (1, 2) pouvant être pressée contre plusieurs creux (97-100) dans le dispositif de préformage (24) afin de produire plusieurs déformations correspondantes de cette bande, une pression déterminée pouvant être produite dans le domaine de chaque creux, caractérisé en ce qu'au moins deux régulateurs de pression indépendants sont prévus au moyen desquels la pression pour au moins une partie des creux peut être réglée individuellement.

28. Dispositif selon la revendication 27, caractérisé en ce qu'il est prévu pour chaque déformation un régulateur de pression permettant de régler la pression à l'endroit de la déformation.

29. Dispositif selon l'une des revendications 27 ou 28, caractérisé en ce que les deux bandes peuvent être déformées par le dispositif de préformage, et que celui-ci comporte une plaque de pression (92) disposée entre les bandes, ainsi que des organes de formage (90, 91) agencés des deux côtés de la plaque de pression, des côtés extérieurs des bandes.
